(19) Europäisches Patentamt
European Patent Office
Office européen des brevets

(11) EP 2 818 921 B1

(12) **FASCICULE DE BREVET EUROPEEN**

(45) Date de publication et mention
de la délivrance du brevet:
**15.02.2017 Bulletin 2017/07**

(51) Int Cl.:
***G02F 1/35*** *(2006.01)*   ***G01N 21/35*** *(2014.01)*

(21) Numéro de dépôt: **13305876.8**

(22) Date de dépôt: **25.06.2013**

(54) **Dispositif de conversion non-lineaire de signal par melange a quatre ondes**

Vorrichtung zur nicht-linearen Signalumwandlung durch Vermischen von vier Wellen

Non-linear signal-conversion device with four-wave mixing

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**31.12.2014 Bulletin 2015/01**

(73) Titulaire: **Commissariat à l'Énergie Atomique
et aux Énergies Alternatives
75015 Paris (FR)**

(72) Inventeurs:
• **Brun, Mickaël**
**38320 EYBENS (FR)**
• **Labeye, Pierre**
**38000 GRENOBLE (FR)**
• **Nicoletti, Sergio**
**38650 SINARD (FR)**
• **Bogris, Adonis**
**15784 ATHENES (GR)**
• **Kapsalis, Alexandros**
**15784 ATHENES (GR)**
• **Syvridis, Dimitris**
**15784 ATHENES (GR)**

(74) Mandataire: **Ilgart, Jean-Christophe
BREVALEX
95, rue d'Amsterdam
75378 Paris Cedex 8 (FR)**

(56) Documents cités:
**EP-A1- 2 042 918**

• **ETTABIB M A ET AL: "FWM-based wavelength
conversion in a silicon germanium waveguide",
OPTICAL FIBER COMMUNICATION
CONFERENCE AND EXPOSITION AND THE
NATIONAL FIBER OPTIC ENGINEERS
CONFERENCE (OFC/NFOEC), 2013, IEEE, 17
mars 2013 (2013-03-17), pages 1-3, XP032427015,
ISBN: 978-1-4799-0457-0**
• **PIERRE BARRITAULT ET AL: "Mlines
characterization of the refractive index profile of
SiGe gradient waveguides at 215 m", OPTICS
EXPRESS, vol. 21, no. 9, 6 mai 2013 (2013-05-06),
page 11506, XP055086871, ISSN: 1094-4087, DOI:
10.1364/OE.21.011506**
• **HAMMANI K ET AL: "Linear and nonlinear
properties of SiGe waveguides at
telecommunication wavelengths", OPTICAL
FIBER COMMUNICATION CONFERENCE AND
EXPOSITION AND THE NATIONAL FIBER OPTIC
ENGINEERS CONFERENCE (OFC/NFOEC), 2013,
IEEE, 17 mars 2013 (2013-03-17), pages 1-3,
XP032426705, ISBN: 978-1-4799-0457-0**
• **HON NICK ET AL: "The third-order nonlinear
optical coefficients of Si, Ge, and Si 1â x Ge x in
the midwave and longwave infrared", JOURNAL
OF APPLIED PHYSICS, AMERICAN INSTITUTE
OF PHYSICS. NEW YORK, US, vol. 110, no. 1, 14
juillet 2011 (2011-07-14), pages 11301-11301,
XP012149125, ISSN: 0021-8979, DOI:
10.1063/1.3592270**

## Description

## DOMAINE TECHNIQUE

L'invention concerne le domaine de l'optique guidée, notamment dans la gamme des longueurs d'ondes de l'infrarouge moyen (également appelé « MidIR »), ici le domaine des longueurs d'ondes comprises entre environ 3 $\mu$m et 7,5 $\mu$m.

L'invention concerne notamment un dispositif de conversion non-linéaire d'un premier signal infrarouge en un deuxième signal infrarouge de longueur d'onde inférieure à celle du premier signal infrarouge, par mélange à quatre ondes, et notamment par mélange à quatre ondes dégénéré. L'invention concerne également un procédé de réalisation d'un tel dispositif. Le dispositif selon l'invention peut être utilisé pour former un guide d'onde non linéaire permettant de convertir un premier signal infrarouge de longueur d'onde appartenant au domaine MidIR en un deuxième signal infrarouge de longueur d'onde appartenant au domaine proche infrarouge (également appelé « NIR ») correspondant à des longueurs d'ondes comprises entre environ 1,3 $\mu$m et 1,9 $\mu$m, utilisé par exemple pour des applications en optique intégrée IR, ou de communication en espace libre.

L'invention concerne également le domaine des capteurs de gaz, et notamment un dispositif de détection de gaz de type NDIR (« NonDispersive InfraRed »),, utilisé par exemple dans les domaines de la sécurité (détection de substances illicites, explosives, de personne ...), le contrôle des émissions industriels de gaz pour la protection de l'environnement, la détection de gaz dans l'habitat, l'automobile, la santé.

## ART ANTÉRIEUR

La famille des capteurs optiques de gaz se démarque des autres types de capteur de gaz en raison de sa grande sélectivité au gaz à détecter. Ils sont basés sur l'utilisation d'une source infrarouge émettant dans la gamme des longueurs d'ondes MidIR permettant d'exciter les transitions vibrationnelles du gaz à détecter. La mesure de la concentration du gaz à détecter peut se faire par différents moyens, par exemple de type NDIR, photo-acoustique, ou encore de type ICLAS. Un capteur de type NDIR mesure directement l'absorption due au gaz à la longueur d'onde d'excitation de celui-ci après le passage de la lumière dans le gaz. L'utilisation de sources infrarouges de type QCL (« Quantum Cascade Laser ») permet de miniaturiser ce type de capteurs. Cette miniaturisation passe également par le développement d'éléments optiques intégrés aptes à transporter et traiter le signal MidIR avec de faibles pertes et d'un système de détection efficace dans le MidIR pour mesurer efficacement l'atténuation du faisceau lumineux par le gaz.

Dans la gamme des longueurs d'ondes MidIR, les détecteurs disponibles sur le marché ont une efficacité de détection typiquement de plusieurs ordres de grandeur plus faible que les détecteurs développés dans l'infrarouge proche, notamment pour les applications télécom et fonctionnant généralement autour d'une longueur d'onde égale à environ 1,55 $\mu$m. Les meilleurs détecteurs de type NIR sont souvent refroidis à basse température soit par un système Peltier multi-étages, soit par fluide cryogénique afin de compenser les courants de fuite élevés, ce qui constitue un frein au développement d'un capteur de gaz intégré miniature. Pour résoudre ce problème, le document Huang et al., Proc SPIE 8155 Infrared Sensors, Devices, and Applications; and Single Photon Imaging II, 81550U (2011) propose d'intégrer un élément non linéaire permettant la conversion de longueurs d'ondes MidIR vers des longueurs d'ondes NIR pour lesquelles des détecteurs à température ambiante efficaces sont disponibles et intégrables. Une telle solution permet également d'augmenter le rapport signal à bruit de la détection par rapport à une détection réalisée directement dans le domaine MidIR. Pour que cette solution soit viable, il faut disposer d'un élément de conversion non linéaire le plus efficace possible, consommant le moins possible d'énergie et compatible avec les lasers QCL, ce qui veut dire fonctionnant en mode TM (transmission magnétique).

La conversion de longueur d'onde se fait dans un élément d'optique intégré dédié et exploite un phénomène non linéaire du troisième ordre se produisant dans le matériau qui le constitue. Cet élément est un guide d'onde optique au design spécifiquement adapté. En injectant dans cet élément de conversion trois longueurs d'ondes différentes, celui-ci génère une quatrième longueur d'onde par un effet appelé mélange à quatre ondes. Dans la version dégénérée de ce phénomène se produisant dans l'élément de conversion, il est suffisant d'injecter seulement deux longueurs d'ondes incidentes, correspondant respectivement à un signal à convertir et un signal appelé signal de pompe. Dans ce cas, deux photons incidents du signal de pompe interagissent avec un photon du signal à convertir et donnent naissance à un troisième photon, ces troisièmes photons formant un signal de sortie appelé signal « idler » de longueur d'onde différente de celles du signal à convertir et du signal de pompe. La loi de conservation de l'énergie impose la relation fondamentale suivante sur la fréquence des ondes en présence et fixe donc les longueurs d'ondes accessibles :

$$2fp = fs + fi \qquad (1)$$

avec fp, fs et fi correspondant respectivement aux fréquences du signal de pompe, du signal à convertir et du signal idler.

De plus, l'efficacité de conversion de puissance du signal de pompe vers le signal idler dépend de manière importante de la dispersion chromatique dans le guide d'onde, et un accord de phase entre les différentes ondes à la longueur d'onde du signal de pompe, se traduisant par une dispersion chromatique nulle, est nécessaire, et se traduit par la relation suivante :

$$2kp = ks + ki \qquad (2)$$

avec kp, ks et ki correspondant respectivement aux constantes de propagation du signal de pompe, du signal à convertir et du signal idler.

L'efficacité de conversion dépend également de manière quadratique du facteur γ.Pp.Leff, où γ est un coefficient proportionnel au coefficient Kerr du matériau utilisé de l'élément de conversion et inversement proportionnel à la taille du mode optique propagé, Pp est la puissance du signal de pompe et Leff la longueur non linéaire effective qui dépend de l'atténuation dans le matériau de l'élément de conversion suivant la relation Leff=(1-$e^{-\alpha L}$)/$\alpha$, avec $\alpha$ correspondant au coefficient d'atténuation du matériau constituant l'élément de conversion et donc aux pertes optiques de propagation dans le guide optique, et avec L correspondant à la longueur du guide. Pour un guide dont le coeur est gros devant la longueur d'onde, plusieurs modes de propagation discrets sont permis (guides dits multi-modes) alors que pour un guide de l'ordre de la longueur d'onde ou plus petit, un seul mode est permis (guide dit monomode). Différentes plateformes existent pour la réalisation de guides d'ondes intégrés fonctionnant dans le domaine MidIR, et par conséquent pour la réalisation d'un élément de conversion non linéaire tel que décrit ci-dessus. Par exemple, le document de M.A. Ettatib "FWM-based Wavelength Conversion in a Silicon Waveguide",OFC 2013, présente une configuration utilisant un guide d'onde en SiGe. Les guides d'ondes les plus connus sont les guides silicium/silice abondamment utilisés pour les applications télécom mais dont la bande passante est limitée dans le domaine MidIR d'une part par la présence de la silice qui absorbe fortement les longueurs d'ondes supérieures à environ 3,6 $\mu$m, et d'autre part du fait du silicium qui absorbe au-delà d'environ 7,5 $\mu$m. Les meilleures performances rapportées dans le MidIR sont pour les guides d'ondes en silicium sur substrat SOI, présentant des pertes comprises entre environ 0,6 et 0,7 dB/cm à une longueur d'onde d'environ 3,39 $\mu$m. Différents types de guide d'onde ont été proposés plus récemment : - guide d'onde en silicium sur saphir, présentant des pertes inférieures à environ 2 dB/cm à une longueur d'onde d'environ 5,18 pm ; - guide d'onde en germanium ; - guide d'onde en SiGe présentant des gradients d'indice optique.

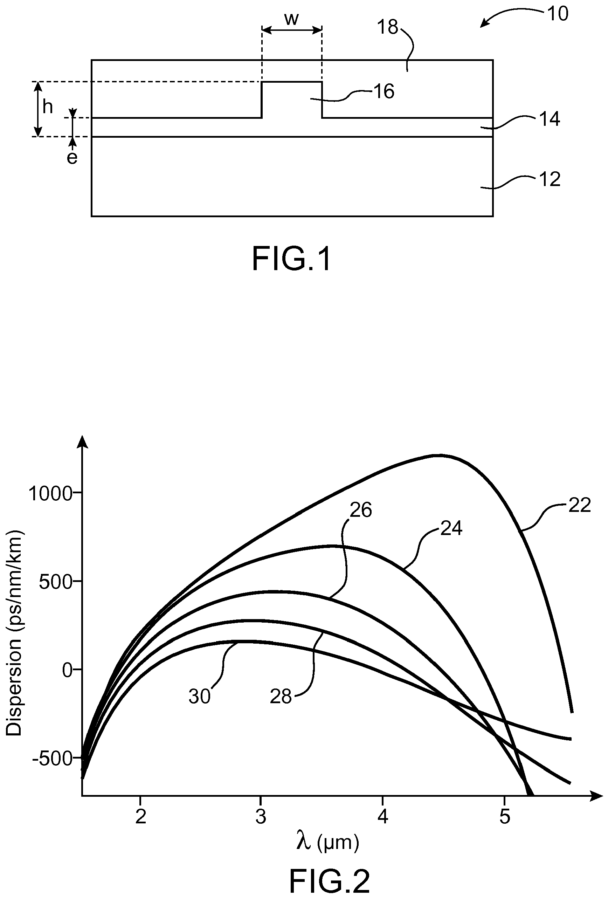

Le document de E-K Tien et al., « Discrète parametric band conversion in silicon for mid-infrared applications », Optics Express 18, vol. 18, n°21, pages 21981- 21989 (2010) décrit un guide d'onde 10 de type silicium sur saphir (également appelé guide d'onde de type SOS pour « Silicon On Sapphire ») en forme de « Slab », ou de bande, représenté schématiquement sur la figure 1.

Ce guide d'onde 10 comporte un substrat 12 à base de saphir sur lequel est réalisée une couche de silicium 14 d'épaisseur e. La couche de silicium 14 comporte une portion 16 de largeur égale à w et d'épaisseur h supérieure à l'épaisseur e du reste de la couche 14. La portion de silicium 16 est entourée d'air ou de saphir 18. L'ingénierie sur la forme du guide d'onde 10, notamment le choix de la valeur de h, permet de déterminer la longueur d'onde pour laquelle la dispersion chromatique est nulle (c'est-à-dire vérifiant la relation (2) ci-dessus), et d'un point de vue général, de limiter la dispersion chromatique du guide d'onde 10 autour de cette longueur d'onde. Des courbes de dispersion chromatique (en ps/nm/km) en fonction de la longueur d'onde λ (en $\mu$m) du guide d'onde 10 sont représentées sur la figure 2 pour différentes valeurs de l'épaisseur e de la couche de silicium 14 (courbe 22 : e = 100 nm ; courbe 24 : e = 200 nm ; courbe 26: e = 300 nm ; courbe 28: e = 400 nm ; courbe 30 : e = 500 nm), pour une hauteur h = 1 $\mu$m et une largeur w = 1 $\mu$m.

Pour un tel guide d'onde 10, on voit donc que la dispersion chromatique reste relativement élevée. De plus, les courbes de dispersion chromatique représentées sur la figure 2 illustrent le fait que dans un tel guide d'onde 10, la dispersion chromatique varie énormément dans la gamme MidIR, par exemple entre environ 250 ps/nm/km et 1000 ps/nm.km pour les longueurs d'ondes comprises entre environ 4 $\mu$m et 6 $\mu$m. Cette variation augmente les contraintes d'accord de phases sur la source du signal de pompe dont le rôle est de préserver l'accord de phases et qui doit être convenablement configurée en longueur d'onde afin de compenser les variations de dispersion dans le domaine MidIR.

De plus, pour un tel guide d'onde 10 de longueur égale à environ 1 cm, les performances de conversion décrites dans ce document ont été calculées avec notamment deux approximations : la première est qu'il n'est pas tenu compte des pertes de propagation dans le guide d'onde 10, et la seconde est qu'un recouvrement de modes entre les longueurs d'onde du signal de pompe et du signal de type MidIR de 100% est considéré, ce qui est en réalité inexact. Ces deux approximations tendent à surestimer au final les efficacités de conversion annoncées pour un tel guide d'onde 10.

Avec un tel guide d'onde 10, la dispersion chromatique obtenue permet de convertir un signal MidIR depuis une première bande de longueurs d'ondes comprises entre 4,2 $\mu$m et 5,2 $\mu$m dans une second bande de longueurs d'ondes comprises entre 1,48 $\mu$m et 1,52 $\mu$m. La longueur d'onde du signal de pompe est configurée en conséquence afin de vérifier la loi de conservation de l'énergie (relation (1) précédente) et les contraintes d'accord de phases (relation (2) précédente), et est donc comprise entre 2,18 $\mu$m et 2,38 $\mu$m. Avec ces paramètres, une efficacité de conversion de -3 dB pour une densité de puissance de pompe de 1 GW/cm$^2$ peut être obtenue, soit un équivalent de 10 W injecté dans le guide d'onde. Une telle puissance de pompe ne permet pas d'envisager l'intégration d'un tel objet sur une puce électronique pour en faire un capteur de gaz et des éléments non linéaires plus efficaces sont donc recherchés.

## EXPOSÉ DE L'INVENTION

Un but de la présente invention est de proposer un dispositif de conversion non-linéaire d'un premier signal infrarouge en un deuxième signal infrarouge de longueur d'onde inférieure à celle du premier signal infrarouge permettant d'obtenir, dans la gamme des longueurs d'ondes du deuxième signal infrarouge, une dispersion chromatique plus faible et sensiblement constante, notamment dans le domaine MidIR, que celle obtenue avec les dispositifs de l'art antérieur, et permettant donc de réaliser une conversion de longueur d'onde plus efficace et cela pour une plus grande gamme de longueurs d'ondes.

Pour cela, la présente invention propose un dispositif de conversion non-linéaire d'un premier signal infrarouge en un deuxième signal infrarouge de longueur d'onde inférieure à celle du premier signal infrarouge par mélange à quatre ondes, comportant au moins une portion de SiGe disposée sur au moins une première couche de matériau d'indice de réfraction, ou indice optique, inférieur à celui du silicium, une concentration en germanium dans la portion de SiGe variant de manière continue entre une première valeur et une deuxième valeur supérieure à la première valeur selon une direction sensiblement perpendiculaire à une face de la première couche sur laquelle la portion de SiGe est disposée, et dans lequel une partie sommitale de la portion de SiGe au niveau de laquelle la concentration en germanium est égale à la deuxième valeur est en contact avec un gaz et/ou un matériau d'indice de réfraction inférieur à celui du silicium.

Un tel dispositif forme un guide d'onde permettant de réaliser une conversion non linéaire, par exemple du domaine MidIR vers le domaine NIR, de manière plus efficace grâce à l'utilisation d'une portion de SiGe à gradient d'indice de réfraction verticale. Cette amélioration de l'efficacité de conversion permet donc, pour une puissance de sortie donnée, de réduire la puissance des signaux destinés à être injectés dans le dispositif de conversion.

De plus, un tel dispositif permet d'avoir des valeurs de la dispersion approximativement au même niveau dans tout le domaine MidIR, ce qui évite d'avoir à configurer une source d'un signal de pompe sur une large bande afin de préserver l'accord de phases.

Une telle portion de SiGe permet également de réduire la dispersion chromatique du dispositif, notamment du mode TM, et cela pour une plus grande gamme de longueurs d'ondes, améliorant ainsi l'efficacité de conversion du dispositif. Ainsi, avec un tel dispositif, pour un premier signal à convertir de longueur d'onde comprise dans une gamme de valeurs donnée, la gamme des longueurs d'ondes du signal de pompe appartenant aux longueurs d'ondes pour lesquelles la dispersion est nulle et permettant donc de réaliser la conversion du premier signal en un deuxième signal de longueur d'onde comprises dans une deuxième gamme, est plus étroite que celle nécessaire avec les dispositifs de l'art antérieur, par exemple de type SOS, pour réaliser cette même conversion.

La longueur d'onde du premier signal infrarouge peut être comprise entre environ 3 μrr et 7,5 μm, et la longueur d'onde du deuxième signal infrarouge peut être comprise entre environ 1,3 μm et 1,9 μm.

Le dispositif peut former un guide d'onde apte à recevoir en entrée le premier signal infrarouge et un signal de pompe de longueur d'onde différente de celles du premier signal infrarouge et du deuxième signal infrarouge, par exemple égale à environ 2 μm, la portion de SiGe pouvant former un coeur du guide d'onde dans lequel la conversion non-linéaire est apte à se produire.

La première couche peut être à base de SiO$_2$ ou de saphir.

La deuxième valeur de la concentration en germanium dans la portion de SiGe est supérieure à environ 20 %, ou peut être supérieure à environ 30 %, ou comprise entre environ 30 % et 40 %.

La partie sommitale de la portion de SiGe et des flancs latéraux de la portion de SiGe peuvent être en contact avec de l'air ou au moins un gaz ou du SiO$_2$ ou du saphir. Lorsque le dispositif sert à la réalisation d'un capteur de gaz, la partie sommitale de la portion de SiGe et des flancs latéraux de la portion de SiGe peuvent être de préférence en contact avec le ou les gaz à analyser ou de l'air.

Le dispositif peut comporter en outre une deuxième couche à base de silicium disposée entre la première couche et la portion de SiGe. Lorsque la première couche est à base de SiO$_2$ et que le dispositif comporte la deuxième couche à base de silicium, la première couche peut correspondre à une couche diélectrique enterrée d'un substrat SOI (« Silicon-On-Insulator », ou silicium sur isolant) et la deuxième couche peut correspondre à la couche superficielle semi-conductrice du substrat SOI.

L'épaisseur de la deuxième couche peut être inférieure ou égale à environ 0,3 μm.

La deuxième couche peut comporter une portion de silicium sur laquelle est disposée la portion de SiGe, ladite portion de silicium comportant, dans un plan parallèle à ladite face de la première couche, une largeur et une longueur sensiblement similaires respectivement à une largeur et une longueur de la portion de SiGe, et peut comporter une épaisseur, perpendiculairement à ladite face de la première couche, supérieure à l'épaisseur du reste de la deuxième couche.

En variante, le dispositif peut comporter en outre une portion de silicium disposée sur la première couche et sur laquelle est disposée la portion de SiGe, ladite portion de silicium comportant, dans un plan parallèle à ladite face de la première couche, une largeur et une longueur sensiblement similaires respectivement à une largeur et une longueur de la portion de SiGe.

La portion de SiGe peut être de forme sensiblement parallélépipédique rectangle et comporter, dans un plan parallèle à ladite face de la première couche, une largeur comprise entre environ 0,5 μm et 0,7 μm et une longueur comprise entre environ 1 cm et 5 cm (en supposant des pertes minimum d'environ 1 dB/cm), et une hauteur, perpendiculairement à ladite face de la première couche, comprise entre environ 1,3 μm et 1,6 μm. Une longueur d'environ 2 cm permet de réaliser une conversion d'environ 0 dB.

L'invention concerne également un procédé de réalisation d'un dispositif de conversion non-linéaire d'un premier signal infrarouge en un deuxième signal infrarouge de longueur d'onde inférieure à celle du premier signal infrarouge par mélange à quatre ondes, comportant au moins la réalisation d'une portion de SiGe disposée sur au moins une première couche de matériau d'indice de réfraction inférieur à celui du silicium et telle qu'une concentration en germanium dans la portion de SiGe varie de manière continue entre une première valeur et une deuxième valeur supérieure à la première valeur selon une direction sensiblement perpendiculaire à une face de la première couche sur laquelle la portion de SiGe est réalisée, et dans lequel une partie sommitale de la portion de SiGe au niveau de laquelle la concentration en germanium est égale à la deuxième valeur est en contact avec un gaz et/ou un matériau d'indice de réfraction inférieur à celui du silicium.

Le procédé peut comporter en outre, préalablement à la réalisation de la portion de SiGe, la réalisation d'une deuxième couche à base de silicium sur la première couche, la portion de SiGe pouvant être réalisée ensuite sur la deuxième couche.

Dans ce cas, la portion de SiGe peut être réalisée par la mise en oeuvre des étapes suivantes :

- épitaxie d'une couche de SiGe sur la deuxième couche telle qu'une concentration en germanium dans la couche de SiGe varie de manière continue entre une première valeur et une deuxième valeur supérieure à la première valeur selon une direction sensiblement perpendiculaire à ladite face de la première couche,
- photolithographie et gravure de la couche de SiGe, formant ladite portion de SiGe.

Dans ce cas, l'étape de gravure de la couche de SiGe peut être mise en oeuvre telle qu'une partie de la deuxième couche soit également gravée, formant une portion de silicium sur laquelle est disposée la portion de SiGe telle que ladite portion de silicium comporte, dans un plan parallèle à ladite face de la première couche, une largeur et une longueur sensiblement similaires respectivement à une largeur et une longueur de la portion de SiGe, et comportant une épaisseur, perpendiculairement à ladite face de la première couche, supérieure à l'épaisseur du reste de la deuxième couche.

Le procédé peut comporter en outre, préalablement à la réalisation de la portion de SiGe, la réalisation d'une portion de silicium sur la première couche et sur laquelle est réalisée la portion de SiGe, ladite portion de silicium pouvant comporter, dans un plan parallèle à ladite face de la première couche, une largeur et une longueur sensiblement similaires respectivement à une largeur et une longueur de la portion de SiGe.

L'invention concerne également un dispositif de détection de gaz de type NDIR comportant au moins un dispositif de conversion non linéaire tel que décrit précédemment, dans lequel ledit dispositif de conversion est apte à réaliser une détection d'un gaz.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente schématiquement un guide d'onde de type SOS selon l'art antérieur;
- la figure 2 représente des courbes de dispersion chromatique en fonction de la longueur d'onde du guide d'onde représenté sur la figure 1 ;
- la figure 3 représente schématiquement un dispositif de conversion non-linéaire d'un premier signal infrarouge en un deuxième signal infrarouge, objet de la présente invention, selon un premier mode de réalisation ;
- la figure 4 représente des courbes de dispersion chromatique en fonction de la longueur d'onde du dispositif de conversion non-linéaire, objet de la présente invention, selon un premier mode de réalisation ;
- la figure 5 représente une longueur d'onde d'un deuxième signal infrarouge pouvant être obtenue avec un dispositif de conversion, objet de la présente invention, en fonction de la longueur d'onde d'un signal de pompe utilisé, pour un premier signal infrarouge de type MidIR ;
- les figures 6 et 7 représentent une variation de l'efficacité de conversion d'un dispositif de conversion, objet de la présente invention, en fonction de paramètres géométriques du dispositif de longueurs respectives de 1 cm et 2 cm ;
- la figure 8 représente des courbes donnant l'efficacité de conversion du dispositif de conversion, objet de la présente invention, en fonction de la longueur d'onde du deuxième signal infrarouge et de la pente de variation de la concentration de germanium dans une portion de SiGe du dispositif ;
- les figures 9A - 9D représentent des étapes d'un premier exemple de procédé de réalisation d'un dispositif de conversion, objet de la présente invention, selon le premier mode de réalisation ;

- les figures 10A - 10E représentent des étapes d'un deuxième exemple de procédé de réalisation d'un dispositif de conversion, objet de la présente invention, selon le premier mode de réalisation ;

- la figure 11 représente schématiquement un dispositif de conversion non-linéaire d'un premier signal infrarouge en un deuxième signal infrarouge, objet de la présente invention, selon un deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

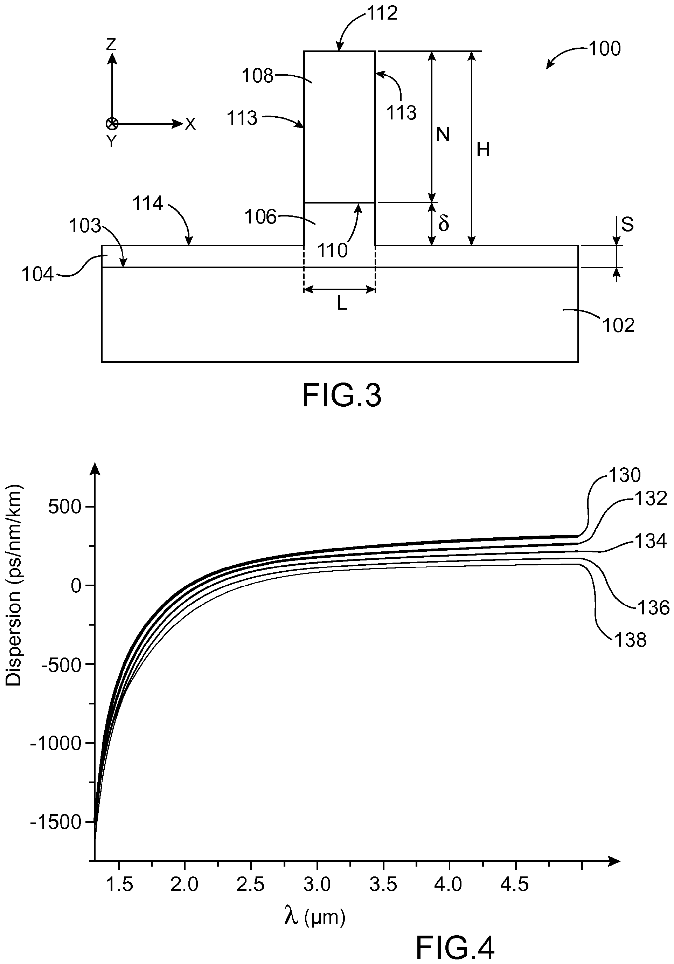

On se réfère tout d'abord à la figure 3 qui représente un dispositif 100 de conversion non-linéaire par mélange à quatre ondes selon un premier mode de réalisation, destiné à réaliser une conversion d'un premier signal infrarouge en un deuxième signal infrarouge de longueur d'onde inférieure à celle du premier signal infrarouge. Dans ce premier mode de réalisation, le premier signal infrarouge a une longueur d'onde comprise entre environ 3 $\mu$m et 7,5 $\mu$m (signal de type MidIR) et le deuxième signal infrarouge a une longueur d'onde comprise entre environ 1,3 $\mu$m et 1,9 $\mu$m (signal de type NIR).

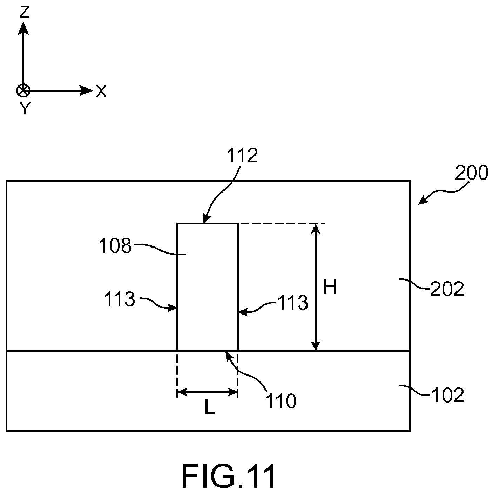

Le dispositif 100 comporte une première couche 102 à base de $SiO_2$, d'épaisseur (dimension selon l'axe Z représenté sur la figure 3) par exemple comprise entre environ 1 $\mu$m et 10 $\mu$m et ici égale à environ 2 $\mu$m, sur laquelle est disposée une deuxième couche 104 à base de silicium. En variante, la première couche 102 pourrait être à base de saphir. Selon une autre variante, le dispositif 100 pourrait ne pas comporter la première couche 102, la face inférieure de la deuxième couche 104 étant dans ce cas en contact avec de l'air. Le dispositif 100 peut comporter en outre une couche support, non représentée sur la figure 3, sur laquelle repose la première couche 102, par exemple en silicium. La deuxième couche 104 comporte une portion de silicium 106 d'épaisseur (dimension selon l'axe Z représenté sur la figure 3, correspondant à la dimension perpendiculaire à une face 103 de la première couche 102 sur laquelle la deuxième couche 104 est disposée) plus importante qu'une épaisseur S du reste de la deuxième couche 104. L'épaisseur S est par exemple égale à environ 0,2 $\mu$m, ou comprise entre environ 0 et 0,3 $\mu$m (une épaisseur de 0 correspond à un dispositif ne comportant pas la deuxième couche 104, comme décrit plus loin en liaison avec la figure 11).

L'épaisseur de la portion de silicium 106, correspondant à la somme des dimensions S et $\delta$ représentées sur la figure 3, est par exemple égale à environ 0,7 $\mu$m ou comprise entre environ 0,5 $\mu$m et 1,6 $\mu$m, avec $\delta$ correspondant à la différence entre l'épaisseur de la portion de silicium 106 et l'épaisseur S du reste de la deuxième couche 104, et ici égale à environ 0,5 $\mu$m ou comprise entre environ 0,5 $\mu$m et 0,6 $\mu$m.

Le dispositif 100 comporte également une portion de SiGe 108 disposée sur la portion de silicium 106. La portion de silicium 106 comporte, dans un plan parallèle à la face 103 de la première couche 102, une largeur et une longueur (dimensions selon les axes X et Y représentés sur la figure 3, c'est-à-dire les dimensions dans un plan parallèle à la face 103 de la première couche 102) sensiblement similaires respectivement à une largeur L et à une longueur M (non visible sur la figure 3) de la portion de SiGe 108. La portion de SiGe 108 est ici de forme sensiblement parallélépipédique rectangle et comporte une largeur L comprise entre environ 0,5 $\mu$m et 0,7 $\mu$m et par exemple égale à environ 0,6 $\mu$m, et une longueur M comprise entre environ 1 cm et 2 cm, et une épaisseur N (dimension perpendiculaire à la face 103 de la première couche 102) par exemple comprise entre environ 1,1 $\mu$m et 1,6 $\mu$m et par exemple égale à environ 1,3 $\mu$m. On peut donc définir une hauteur H, correspondant à la somme des dimensions N + $\delta$, comprise entre environ 1,7 $\mu$m et 2,1 $\mu$m et ici égale à environ 1,8 $\mu$m. Lorsque la dimension $\delta$ est proche de 0, la hauteur H peut être comprise entre environ 1,5 $\mu$m et 2,8 $\mu$m, et cela sans modifier les contraintes d'accord de phases dans le dispositif 100.

Une face supérieure 114 de la deuxième couche 104 ainsi que les parois latérales de la portion de silicium 106 et de la portion de SiGe 108 et la partie sommitale 112 de la portion de SiGe 108 sont en contact avec de l'air. En variante, il est possible que ces éléments soient entourés d'un gaz et/ou d'un matériau présentant un indice de réfraction inférieur à celui du silicium, comme par exemple du $SiO_2$ ou du saphir.

Le SiGe de la portion 108 présente une concentration en germanium croissant linéairement avec son épaisseur. En variante, il est possible que cette croissance ne soit pas linéaire. La concentration en germanium de la portion de SiGe 108 varie de manière continue entre une première valeur et une deuxième valeur supérieure à la première valeur selon une direction sensiblement perpendiculaire à la face 103 de la première couche 102 (direction parallèle à l'axe Z). La première valeur correspond à la concentration en germanium de la partie de la portion de SiGe 108 se trouvant en contact avec la portion de silicium 106, au niveau d'une face 110 de la portion 108, et est par exemple de valeur sensiblement nulle (donc de nature proche du silicium). La deuxième valeur correspond à la concentration en germanium au niveau d'une partie sommitale 112 de la portion 108, et est par exemple comprise entre environ 30 % et 40 %, ou plus généralement supérieure à environ 20 %.

Ce dispositif 100 forme un guide d'onde apte à réaliser une conversion non-linéaire par mélange à quatre ondes, et notamment ici par mélange à quatre ondes dégénéré, d'un premier signal infrarouge de type MidIR en un deuxième signal infrarouge de type NIR. Le premier signal infrarouge est destiné à être introduit au niveau d'une entrée du dispositif 100 correspondant à une des faces de la portion de SiGe 108 se trouvant dans un plan parallèle au plan (X,Z) visible sur la figure 3. Un signal de pompe de longueur d'onde différente de celles du premier signal infrarouge et du deuxième signal infrarouge destiné à être obtenu en sortie du dispositif 100, est également appliqué en entrée du dispositif 100. En variante, ces signaux peuvent être injectés dans le dispositif 100 en passant au préalable par un coupleur latéral par exemple de type coupleur évanescent.

La structure particulière du dispositif 100 est formée par un matériau enterré présentant un faible indice de réfraction (correspondant à la première couche 102 dont le matériau présente un indice optique inférieur à celui du silicium), du silicium (correspondant à la deuxième couche 104 et à la portion 106) et une portion de SiGe 108 avec une proportion de germanium croissante dans la direction Z (perpendiculaire aux faces principales de la couche 102) et forme un guide d'onde qui a pour effet de localiser fortement le champ dans la partie du guide où la proportion de germanium est la plus forte, c'est-à-dire au niveau de la partie sommitale 112 de la portion de SiGe 108. Une telle localisation favorise les interactions non linéaires destinées à se produire dans le dispositif 100 pour réaliser une conversion non-linéaire par mélange à quatre ondes, et notamment par mélange à quatre ondes dégénéré, et minimiser la proportion de champ dans la première couche 102 afin de limiter les pertes optiques dans le guide d'onde pour le premier signal infrarouge destiné à être converti.

L'augmentation de la proportion de germanium au-delà de 20% dans la portion de SiGe 108 a également pour effet d'augmenter les pertes optiques dans le domaine NIR qui est ici le domaine des longueurs d'ondes du signal idler, ou deuxième signal infrarouge, destiné à être obtenu en sortie du dispositif 100, car le germanium est absorbant pour les longueurs d'ondes inférieures à environ 2,1 μm.

Les paramètres de design du dispositif 100 sont donc choisis afin de trouver le meilleur compromis entre ces différents effets, ces paramètres correspondant aux matériaux et dimensions des éléments du dispositif 100 précédemment décrits. De plus, le fait que la portion de SiGe 108 soit disposée sur la portion de silicium 106 dont l'épaisseur est supérieure à celle du reste de la deuxième couche 104 permet d'éloigner le mode du matériau à faible indice de réfraction de la première couche 102 qui génère beaucoup de pertes dans le domaine MidIR.

Des courbes de dispersion chromatique (en ps/nm/km) en fonction de la longueur d'onde λ (en μm) du dispositif 100 sont représentées sur la figure 4 pour différentes valeurs de la hauteur H (courbe 130 : H = 1,7 μm ; courbe 132 : H = 1,8 μm ; courbe 134 : H = 1,9 μm ; courbe 136 : H = 2 μm ; courbe 138 : H = 2,1 μm). On voit sur cette figure que la dispersion chromatique du mode TM du dispositif 100 est plus plate dans la gamme des longueurs d'ondes MidIR que celle obtenue en technologie SOS comme précédemment décrit en liaison avec la figure 2. En effet, le design du dispositif 100 (dimensions, matériaux, niveau et pente de la concentration de germanium dans la portion 108) est ajusté afin de fixer la longueur d'onde de dispersion nulle (celle vérifiant la relation (2) précédemment décrite) à la longueur d'onde du signal de pompe choisi. A cette longueur d'onde, le signal de pompe est en phase avec le signal à convertir, ce qui maximise l'efficacité de conversion. Plus la courbe de dispersion du dispositif de conversion non linéaire est plate et proche de zéro, plus la conversion obtenue sera maximale et plus les contraintes d'accord des phases sur le signal de pompe seront réduites. De cette manière, un signal de pompe de longueur d'onde proche de 2,1 μm (variant d'environ 25 nm autour de cette valeur) sera en phase avec un premier signal infrarouge à convertir variant sur une grande plage de valeurs (par exemple entre environ 4,1 μm et 4,8 μm) pour permettre la conversion. A contrario, dans le cas des guides d'ondes de type SOS de l'art antérieur, il est nécessaire d'adapter la longueur d'onde du signal de la pompe entre 2,18 μm et 2,38 μm, soit une adaptation sur une largeur de bande d'environ 200 nm pour satisfaire les mêmes conditions d'accord de phase et permettre la conversion d'une signal infrarouge de la bande 4,2 μm - 5,2 μm.

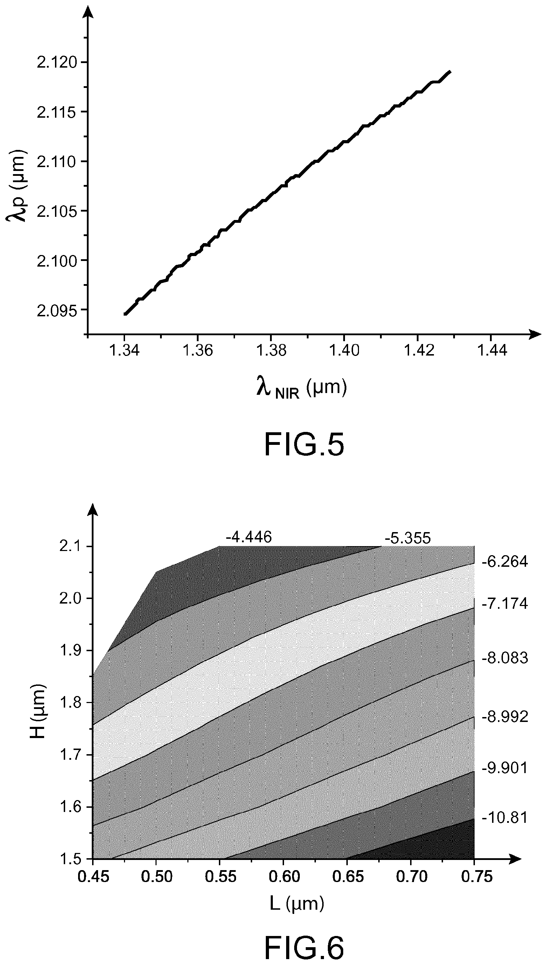

La courbe représentée sur la figure 5 représente la longueur d'onde $\lambda_{NIR}$ du deuxième signal infrarouge (en abscisses) pouvant être obtenue avec le dispositif 100 en fonction de la longueur d'onde $\lambda_P$ du signal de pompe (en ordonnée), pour un premier signal infrarouge de type MidIR.

Un autre avantage du dispositif 100 par rapport aux dispositifs de l'art antérieur et notamment ceux de type SOS concerne l'efficacité de conversion obtenue qui est beaucoup plus importante. Les calculs d'efficacité de conversion ont été réalisés sur un dispositif en considérant un recouvrement réel des modes du signal de pompe, du premier signal infrarouge de type MidIR de longueur d'onde égale à environ 4,5 μm et du deuxième signal infrarouge NIR qui varie entre environ 0,6 et 0,9 suivant la longueur d'onde MidIR considérée et des pertes de propagation d'environ 2 dB/cm. La taille du mode dans le dispositif 100 dépend de la longueur d'onde du premier signal infrarouge et de la géométrie du guide d'onde formé par le dispositif 100. Dans ces conditions, pour une densité d'énergie, ou densité de puissance de pompe, d'environ 0,1 GW/cm$^2$, l'efficacité de conversion est d'environ -6 dB. Ainsi, dans le dispositif 100, la puissance injectée pour atteindre une densité d'énergie d'environ 0,1 GW/cm$^2$ est seulement de 1 W, ce qui est bien inférieure aux 10 W requis pour un guide d'onde de type SOS. De plus, pour une augmentation du signal de pompe d'environ 3 dB (soit 2W injecté au total), l'efficacité de conversion augmente avec le carré de cette puissance, soit environ 6 dB pour une conversion totale de 0 dB.

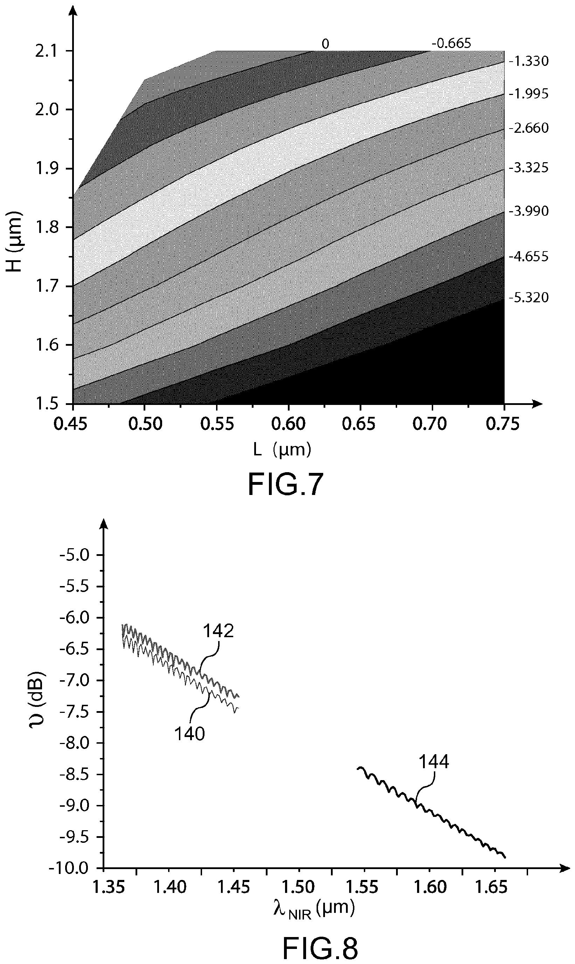

Les courbes de la figure 6 représentent la variation de l'efficacité de conversion (en dB) du dispositif 100 en fonction des paramètres H et L (en μm) pour une longueur M = 1 cm. Les courbes de la figure 7 représentent la variation de l'efficacité de conversion (en dB) du dispositif 100 en fonction des paramètres H et L (en μm) pour une longueur M = 2 cm. Comme les pertes dans le dispositif 100 sont relativement faibles, on voit que plus le guide d'onde formé par le dispositif 100 est long (plus M est grand), plus la conversion réalisée par le dispositif 100 est efficace. La géométrie du guide d'onde, c'est-à-dire les dimensions des différents éléments 104, 106 et 108 du dispositif 100, est définie en fonction de ces règles de dessin pour maximiser l'efficacité de conversion du dispositif 100.

Les courbes représentées sur la figure 8 illustrent l'influence de la pente du gradient de la concentration de germanium dans la portion de SiGe 108 (courbe 140 : pente de 0,1 μm$^{-1}$ ; courbe 142 : pente de 0,133 μm$^{-1}$ ; courbe 144 : pente de 0,2 μm$^{-1}$ ; ces pentes correspondant aux variations de l'indice par micron et pouvant être linéaires ou légèrement paraboliques) pour une géométrie donnée du dispositif 100 (ici H = 2,05 μm, δ = 1 μm, L = 550 nm et M = 1 cm) sur l'efficacité de conversion v du dispositif, en dB, et en fonction de la longueur d'onde du deuxième signal infrarouge. On voit sur cette figure que le changement de la pente influe sur l'efficacité de conversion du dispositif 100 mais également sur la gamme spectrale du deuxième signal infrarouge pouvant être obtenue en sortie du dispositif 100. L'optimum est ici trouvé pour une pente égale à 0,133 μm$^{-1}$ pour une longueur d'onde de sortie souhaitée (du deuxième signal infrarouge) d'environ 1,4 μm, et qui correspond à une concentration maximale de Ge de 37 % au niveau de la partie sommitale 112 de la portion de SiGe 108.

Dans le premier mode de réalisation précédemment décrit, le dispositif 100 ne comporte pas de gaine supérieure. En effet, la partie sommitale 112 et des flancs latéraux 113 de la portion de SiGe 108 ne sont pas disposés contre un matériau de faible indice de réfraction (inférieur à celui du silicium) destiné à confiner les champs transmis dans la portion 108, mais sont en contact avec de l'air. Le champ du dispositif 100 s'étend au-delà de la structure guidante, c'est-à-dire de la portion de SiGe 108, de manière importante. C'est également le cas, dans une moindre mesure, si la partie sommitale 112 et les flancs latéraux 113 de la portion de SiGe 108 sont disposés contre une couche de faible épaisseur de matériau de faible indice de réfraction. La portion de SiGe 108 peut donc également servir à réaliser une fonction de capteur de gaz. Les molécules de gaz se trouvant à proximité qui « voient » le champ électromagnétique évanescent autour du guide d'ondes absorbent la lumière et génèrent des pertes proportionnelles à la concentration du gaz. En réalisant une voie de référence encapsulée, c'est-à-dire une portion de SiGe similaire à la portion 108 mais non en contact avec le gaz comme la portion 108, qui réalise uniquement une conversion de longueurs d'ondes vers le domaine NIR et une voie permettant de réaliser simultanément la fonction capteur et la conversion (la portion 108 en contact avec le gaz), une mesure différentielle du signal NIR dans les deux branches permet de remonter à la concentration de gaz.

La structure du dispositif 100 est complètement co-intégrable avec des guides d'ondes classiques de l'industrie microélectronique.

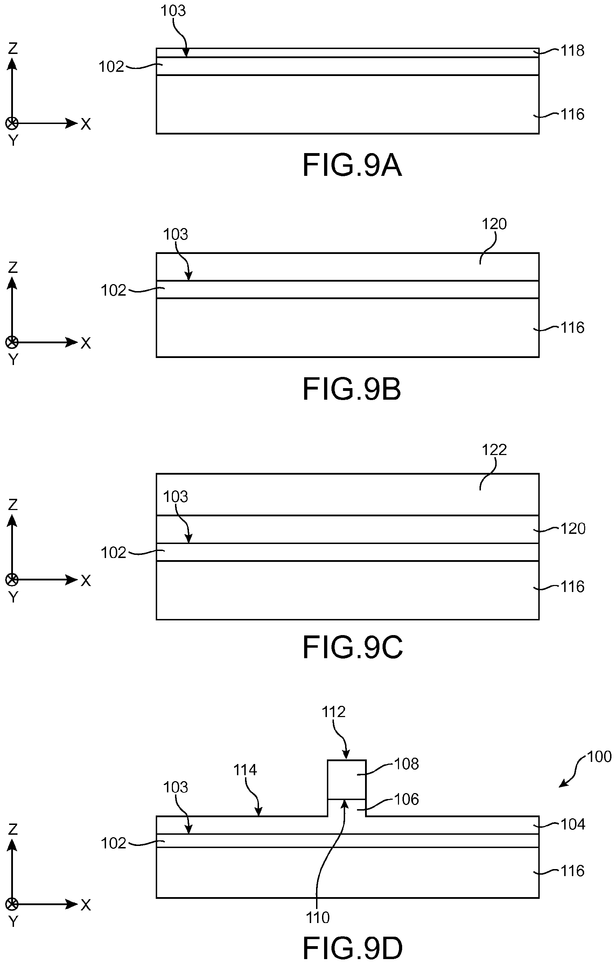

Un exemple d'un premier procédé de réalisation du dispositif 100 est décrit en liaison avec les figures 9A-9D.

Le dispositif 100 est réalisé à partir d'un substrat SOI comportant une couche support 116 à base de silicium, la première couche 102 de SiO$_2$ d'épaisseur (dimension selon l'axe Z) par exemple égale à environ 2 μm et formant la couche diélectrique enterrée du substrat SOI, et une couche superficielle 118 de silicium d'épaisseur (dimension selon l'axe Z) initiale égale à environ 400 nm (figure 9A).

Comme représenté sur la figure 9B, une étape de croissance de silicium par épitaxie est mise en oeuvre afin de former, sur la couche superficielle 118, une épaisseur de silicium supplémentaire de 0,3 μm. Cette épaisseur supplémentaire de silicium forme, avec la couche superficielle 118, une couche de silicium 120.

Une couche de SiGe 122 est ensuite réalisée par épitaxie sur la couche 120. Cette épitaxie est mise en oeuvre en faisant varier la concentration en germanium de manière croissante telle que cette concentration varie par exemple de 0 % à environ 37 % le long de l'épaisseur de la couche 122 (parallèle à l'axe Z) avec une pente égale à environ 28 %/μm (figure 9C). L'épaisseur finale de la couche 122 est donc ici égale à environ 1,32 μm.

Cette couche 122 est alors structurée en forme de guide d'onde par lithographie puis par gravure complète de l'épaisseur de la couche de SiGe 122 se trouvant en dehors de la zone lithographiée, formant ainsi la portion de SiGe 108. Une gravure partielle des parties de la couche de silicium 120 non recouvertes par la portion de SiGe 108 est ensuite mise en oeuvre, formant la deuxième couche 104 d'épaisseur par exemple égale à environ 0,2 μm ainsi que la portion 106 d'épaisseur égale à environ 0,5 μm (figure 9D).

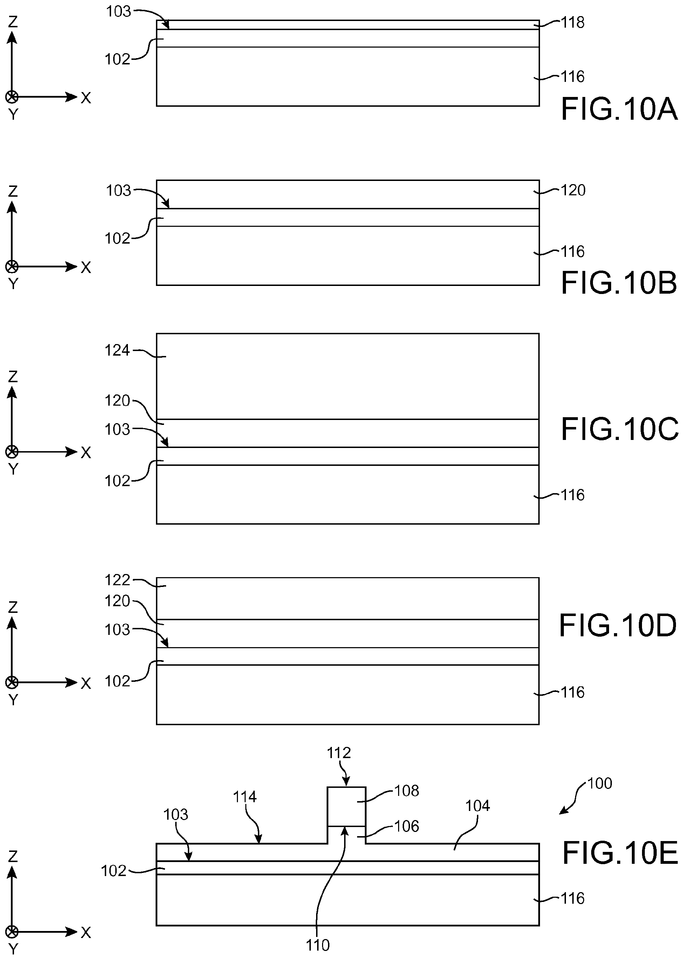

Un deuxième exemple de procédé de réalisation du dispositif 100 est décrit en liaison avec les figures 10A- 10E.

Comme précédemment décrit pour le premier exemple de procédé de réalisation, le dispositif 100 est réalisé à partir d'un substrat SOI comportant la couche support 116 à base de silicium, la première couche 102 d'épaisseur par exemple égale à environ 2 μm et la couche superficielle 118 de silicium d'épaisseur initiale égale à environ 400 nm (figure 10A).

Comme représenté sur la figure 10B, une étape de croissance de silicium par épitaxie est mise en oeuvre afin de former, sur la couche superficielle 118, une épaisseur de silicium supplémentaire de 0,3 μm, celle-ci formant, avec la couche 118, la couche de silicium 120.

Une couche de SiGe 124 est ensuite réalisée par épitaxie sur la couche 120. Cette épitaxie est mise en oeuvre en faisant varier la concentration en germanium de manière croissante telle que cette concentration varie par exemple de 0 à environ 40 % le long d'environ une première moitié de l'épaisseur de la couche 122 (parallèle à l'axe Z) avec une pente égale à environ 28%/μm, puis une redescente jusqu'à environ 0% de germanium avec la même pente dans une deuxième moitié de l'épaisseur de la couche 122, pour une épaisseur totale de couche 122 égale à environ 3μm (figure 10C). Le profil de la concentration en germanium totale dans la direction perpendiculaire au substrat (parallèle à l'axe Z) est donc ici triangulaire.

Comme représenté sur la figure 10D, la couche 124 est ensuite amincie localement par gravure jusqu'à atteindre la concentration de Ge à 37% au niveau de la partie de la couche 124 présentant une concentration en germanium croissante, formant la couche 122 d'épaisseur égale à environ 1,32 μm. Le guide d'onde est enfin structuré comme précédemment décrit par lithographie et gravure (figure 10E).

Ce deuxième exemple de procédé de réalisation du dispositif 100 a pour avantage de permettre la co-intégration, sur le même wafer, du dispositif 100 avec une circuiterie optique réalisée sur les parties non amincies du substrat (non visibles sur les figures 10A à 10E) et comportant des éléments faisant appel à des portions de la couche de SiGe 124 non gravées présentant un profil de concentration de forme triangulaire.

On se réfère maintenant à la figure 11 qui représente un dispositif 200 de conversion non-linéaire par mélange à quatre ondes selon un deuxième mode de réalisation, destiné à réaliser une conversion d'un premier signal infrarouge en un deuxième signal infrarouge de longueur d'onde inférieure à celle du premier signal infrarouge. Comme pour le premier mode de réalisation, le premier signal infrarouge a une longueur d'onde comprise entre environ 3 μm et 7,5 μm (de type MidIR) et le deuxième signal infrarouge a une longueur d'onde comprise entre environ 1,3 μm et 1,9 μm (de type NIR).

Comme le dispositif 100 précédemment décrit, le dispositif 200 comporte la première couche 102 à base de $SiO_2$ ainsi que la portion de SiGe 108 présentant une concentration en germanium variant de manière croissante le long de la direction de l'épaisseur (parallèle à l'axe Z) de la portion 108. Par contre, contrairement au dispositif 100, le dispositif 200 ne comporte pas la seconde couche 104 de silicium formée sur la première couche 102, ni de portion de silicium 106 disposée entre la première couche 102 et la portion de SiGe 108.

Ainsi, dans le dispositif 200, la portion de SiGe 108 est disposée directement sur la première couche 102, par exemple via un dépôt de type PECVD permettant de faire varier la composition de germanium avec l'épaisseur.

De plus, le dispositif 200 comporte en outre une couche 202 de matériau à bas indice de réfraction, c'est-à-dire ici dont l'indice de réfraction est inférieur à celui du silicium, par exemple du $SiO_2$ ou du saphir. Les parois latérales de la portion de SiGe 108 ainsi que la partie sommitale 112 de la portion de SiGe 108 sont donc ici en contact avec le matériau de la couche 202.

Par rapport au dispositif 100, ce dispositif 200 comporte moins d'élément à réaliser. Par contre, en raison de l'absence de la deuxième couche 104 et de la portion 106 de silicium, ce dispositif 200 engendre plus de pertes dans le domaine des longueurs d'ondes MidIR que le dispositif 100. L'ajout de la couche 202 modifie le mode dans le guide non linéaire. Cela implique donc un ajustement des paramètres géométriques du guide.

## Revendications

1. Dispositif (100, 200) apte à réaliser une conversion non-linéaire d'un premier signal infrarouge en un deuxième signal infrarouge de longueur d'onde inférieure à celle du premier signal infrarouge par mélange à quatre ondes, comportant au moins une portion de SiGe (108) disposée sur au moins une première couche (102) de matériau d'indice de réfraction inférieur à celui du silicium, une concentration en germanium dans la portion de SiGe (108) variant de manière continue entre une première valeur et une deuxième valeur supérieure à la première valeur selon une direction sensiblement perpendiculaire à une face (103) de la première couche (102) sur laquelle la portion de SiGe (108) est disposée, la première valeur correspondant à la concentration en germanium au niveau d'une face (110) de la portion de SiGe (108) se trouvant du côté de la première couche (102), et dans lequel une partie sommitale (112) de la portion de SiGe (108) au niveau de laquelle la concentration en germanium est égale à la deuxième valeur est en contact avec un gaz et/ou un matériau (202) d'indice de réfraction inférieur à celui du silicium, la deuxième valeur de la concentration en germanium dans la portion de SiGe (108) étant supérieure à environ 20 %.

2. Dispositif (100, 200) selon la revendication 1, dans lequel la longueur d'onde du premier signal infrarouge destiné à être converti par le dispositif est comprise entre environ 3 μm et 7,5 μm, et dans lequel la longueur d'onde du deuxième signal infrarouge destiné à être délivré par le dispositif est comprise entre environ 1,3 μm et 1,9 μm.

3. Dispositif (100, 200) selon l'une des revendications précédentes, ledit dispositif (100, 200) formant un guide d'onde apte à recevoir en entrée le premier signal infrarouge et un signal de pompe de longueur d'onde différente de celles du premier signal infrarouge et du deuxième signal infrarouge, la portion de SiGe (108) formant un coeur du guide d'onde dans lequel la conversion non-linéaire est apte à se produire.

4. Dispositif (100, 200) selon l'une des revendications précédentes, dans lequel la première couche (102) est à base de $SiO_2$ ou de saphir.

5. Dispositif (100, 200) selon l'une des revendications précédentes, dans lequel la partie sommitale (112) de la portion de SiGe (108) et des flancs latéraux (113) de la portion de SiGe (108) sont en contact avec de l'air ou au moins un gaz ou du $SiO_2$ (202) ou du saphir.

6. Dispositif (100) selon l'une des revendications précédentes, comportant en outre une deuxième couche (104) à base de silicium disposée entre la première couche (102) et la portion de SiGe (108).

7. Dispositif (100) selon la revendication 6, dans lequel l'épaisseur de la deuxième couche (104) est inférieure ou égale à environ 0,3 μm.

8. Dispositif (100) selon l'une des revendications 6 ou 7, dans lequel la deuxième couche (104) comporte une portion de silicium (106) sur laquelle est disposée la portion de SiGe (108), ladite portion de silicium (106) comportant, dans un plan parallèle à ladite face (103) de la première couche (102), une largeur et une longueur sensiblement similaires respectivement à une largeur et une longueur de la portion de SiGe (108), et comporte une épaisseur, perpendiculairement à ladite face (103) de la première couche (102), supérieure à l'épaisseur du reste de la deuxième couche (104).

9. Dispositif (100) selon l'une des revendications 1 à 5, comportant en outre une portion de silicium (106) disposée sur la première couche (102) et sur laquelle est disposée la portion de SiGe (108), ladite portion de silicium comportant, dans un plan parallèle à ladite face (103) de la première couche (102), une largeur et une longueur sensiblement similaires respectivement à une largeur et une longueur de la portion de SiGe (108).

10. Dispositif (100, 200) selon l'une des revendications précédentes, dans lequel la portion de SiGe (108) est de forme sensiblement parallélépipédique rectangle et comporte, dans un plan parallèle à ladite face (103) de la première couche (102), une largeur comprise entre environ 0,5 μm et 0,7 μm et une longueur comprise entre environ 1 cm et 5 cm, et une hauteur, perpendiculairement à ladite face (103) de la première couche (102), comprise entre environ 1,3 μm et 1,6 μm.

11. Procédé de réalisation d'un dispositif (100, 200) apte à réaliser une conversion non-linéaire d'un premier signal infrarouge en un deuxième signal infrarouge de longueur d'onde inférieure à celle du premier signal infrarouge par mélange à quatre ondes, comportant au moins la réalisation d'une portion de SiGe (108) disposée sur au moins une première couche (102) de matériau d'indice de réfraction inférieur à celui du silicium, telle qu'une concentration en germanium dans la portion de SiGe (108) varie de manière continue entre une première valeur et une deuxième valeur supérieure à la première valeur selon une direction sensiblement perpendiculaire à une face (103) de la première couche (102) sur laquelle la portion de SiGe (108) est réalisée, la première valeur correspondant à la concentration en germanium au niveau d'une face (110) de la portion de SiGe (108) se trouvant du côté de la première couche (102), et dans lequel une partie sommitale (112) de la portion de SiGe (108) au niveau de laquelle la concentration en germanium est égale à la deuxième valeur est en contact avec un gaz et/ou un matériau (202) d'indice de réfraction inférieur à celui du silicium, la deuxième valeur de la concentration en germanium dans la portion de SiGe (108) étant supérieure à environ 20%.

12. Procédé selon la revendication 11, comportant en outre, préalablement à la réalisation de la portion de SiGe (108), la réalisation d'une deuxième couche (104) à base de silicium sur la première couche (102), la portion de SiGe (108) étant réalisée ensuite sur la deuxième couche (104).

13. Procédé selon la revendication 12, dans lequel la portion de SiGe (108) est réalisée par la mise en oeuvre des étapes suivantes :

     - épitaxie d'une couche de SiGe (122) sur la deuxième couche (104) telle qu'une concentration en germanium dans la couche de SiGe (122) varie de manière continue entre une première valeur et une deuxième valeur supérieure à la première valeur selon une direction sensiblement perpendiculaire à ladite face (103) de la première couche (102),
     - photolithographie et gravure de la couche de SiGe (122), formant ladite portion de SiGe (108).

14. Procédé selon la revendication 13, dans lequel l'étape de gravure de la couche de SiGe (122) est mise en oeuvre telle qu'une partie de la deuxième couche (104) est également gravée, formant une portion de silicium (106) sur laquelle est disposée la portion de SiGe (108) telle que ladite portion de silicium (106) comporte, dans un plan parallèle à ladite face (103) de la première couche (102), une largeur et une longueur sensiblement similaires respectivement à une largeur et une longueur de la portion de SiGe (108), et comportant une épaisseur, perpendiculairement à ladite face (103) de la première couche (102), supérieure à l'épaisseur du reste de la deuxième couche (104).

15. Procédé selon l'une des revendications 11 ou 12, comportant en outre, préalablement à la réalisation de la portion de SiGe (108), la réalisation d'une portion de silicium (106) sur la première couche (102) et sur laquelle est réalisée la portion de SiGe (108), ladite portion de silicium (106) comportant, dans un plan parallèle à ladite face (103) de la première couche (102), une largeur et une longueur sensiblement similaires respectivement à une largeur et une longueur de la portion de SiGe (108).

16. Dispositif de détection de gaz de type NDIR comportant au moins un dispositif (100, 200) de conversion non linéaire selon l'une des revendications 1 à 10, dans lequel ledit dispositif de conversion est apte à réaliser une détection d'un gaz.

**Patentansprüche**

1. Vorrichtung (100, 200), die dazu geeignet ist, eine nicht-lineare Signalumwandlung eines ersten Infrarotsignals in ein zweites Infrarotsignal mit geringerer Wellenlänge als das erste Infrarotsignal durch Mischen mit vier Wellen durchzuführen, enthaltend zumindest einen SiGe-Abschnitt (108), der auf zumindest einer ersten Schicht (102) aus einem Material mit geringerem Brechungsindex als Silicium angeordnet ist, wobei eine Germanium-Konzentration in dem SiGe-Abschnitt (108) kontinuierlich zwischen einem ersten Wert und einem zweiten Wert, der höher als der erste Wert ist, in einer im Wesentlichen senkrecht zu einer Fläche (103) der ersten Schicht (102) verlaufenden Richtung variiert, auf welcher der SiGe-Abschnitt (108) angeordnet ist, wobei der erste Wert der Germanium-Konzentration im Bereich einer Fläche (110) des SiGe-Abschnitts (108) entspricht, die sich auf der Seite der ersten Schicht (102) befindet, und wobei ein Scheitelbereich (112) des SiGe-Abschnitts (108), bei dem die Germanium-Konzentration gleich dem zweiten Wert ist, in Kontakt mit einem Gas und/oder einem Material (202) mit geringerem Brechungsindex als Silicium ist, wobei der zweite Wert der Germanium-Konzentration in dem SiGe-Abschnitt (108) höher als etwa 20 % ist.

2. Vorrichtung (100, 200) nach Anspruch 1, wobei die Wellenlänge des ersten Infrarotsignals, das von der Vorrichtung umgewandelt werden soll, zwischen etwa 3 $\mu$m und 7,5 $\mu$m liegt und wobei die Wellenlänge des zweiten Infrarotsignals, das von der Vorrichtung geliefert werden soll, zwischen etwa 1,3 $\mu$m und 1,9 $\mu$m liegt.

3. Vorrichtung (100, 200) nach einem der vorangehenden Ansprüche, wobei die Vorrichtung (100, 200) einen Wellenleiter bildet, der dazu geeignet ist, am Eingang das erste Infrarotsignal und ein Pumpsignal mit einer von der Wellenlänge des ersten Infrarotsignals und des zweiten Infrarotsignals verschiedenen Wellenlänge zu empfangen, wobei der SiGe-Abschnitt (108) einen Kern des Wellenleiters bildet, in welchem die nicht-lineare Umwandlung erfolgen kann.

4. Vorrichtung (100, 200) nach einem der vorangehenden Ansprüche, wobei die erste Schicht (102) auf Basis von SiO$_2$ oder Saphir besteht.

5. Vorrichtung (100, 200) nach einem der vorangehenden Ansprüche, wobei der Scheitelbereich (112) des SiGe-Abschnitts (108) und Seitenflanken (113) des SiGe-Abschnitts (108) in Kontakt mit Luft oder zumindest einem Gas oder SiO$_2$ (202) oder Saphir sind.

6. Vorrichtung (100) nach einem der vorangehenden Ansprüche, ferner enthaltend eine zweite Schicht (104) auf Basis von Silicium, die zwischen der ersten Schicht (102) und dem SiGe-Abschnitt (108) angeordnet ist.

7. Vorrichtung (100) nach Anspruch 6, wobei die Dicke der zweiten Schicht (104) geringer oder gleich etwa 0,3 $\mu$m ist.

8. Vorrichtung (100) nach einem der Ansprüche 6 oder 7, wobei die zweite Schicht (104) einen Silicium-Abschnitt (106) aufweist, an dem der SiGe-Abschnitt (108) angeordnet ist, wobei der Silicium-Abschnitt (106) in einer parallel zur Fläche (103) der ersten Schicht (102) verlaufenden Ebene eine Breite und eine Länge hat, die im Wesentlichen ähnlich zu einer Breite bzw. einer Länge des SiGe-.Abschnitts (108) sind, und eine Dicke senkrecht zur Fläche (103) der ersten Schicht (102) aufweist, die größer als die Dicke der restlichen zweiten Schicht (104) ist.

9. Vorrichtung (100) nach einem der Ansprüche 1 bis 5, ferner enthaltend einen Silicium-Abschnitt (106), der an der ersten Schicht (102) angeordnet ist und an dem der SiGe-Abschnitt (108) angeordnet ist, wobei der Silicium-Abschnitt in einer parallel zur Fläche (103) der ersten Schicht (102) verlaufenden Ebene eine Breite und eine Länge hat, die im Wesentlichen ähnlich zu einer Breite bzw. einer Länge des SiGe-Abschnitts (108) sind.

10. Vorrichtung (100, 200) nach einem der vorangehenden Ansprüche, wobei der SiGe-Abschnitt (108) im Wesentlichen quaderförmig ist und in einer parallel zur Fläche (103) der ersten Schicht (102) verlaufenden Ebene eine Breite, die zwischen etwa 0,5 $\mu$m und 0,7 $\mu$m liegt, eine Länge, die zwischen etwa 1 cm und 5 cm liegt, und eine Höhe senkrecht zur Fläche (103) der ersten Schicht (102) aufweist, die zwischen etwa 1,3 $\mu$m und 1,6 $\mu$m liegt.

11. Verfahren zum Herstellen einer Vorrichtung (100, 200), die dazu geeignet ist, eine nicht-lineare Signalumwandlung eines ersten Infrarotsignals in ein zweites Infrarotsignal mit geringerer Wellenlänge als das erste Infrarotsignal durch Mischen mit vier Wellen durchzuführen, umfassend zumindest das Herstellen eines SiGe-Abschnitts (108), der auf zumindest einer ersten Schicht (102) aus einem Material mit geringerem Brechungsindex als Silicium angeordnet ist, derart, dass eine Germanium-Konzentration in dem SiGe-Abschnitt (108) kontinuierlich zwischen einem ersten Wert und einem zweiten Wert, der höher als der erste Wert ist, in einer im Wesentlichen senkrecht zu einer Fläche (103) der ersten Schicht (102) verlaufenden Richtung variiert, auf welcher der SiGe-Abschnitt (108) ausgebildet ist, wobei der erste Wert der Germanium-Konzentration im Bereich einer Fläche (110) des SiGe-Abschnitts (108) entspricht, die sich auf der Seite der ersten Schicht (102) befindet, und wobei ein Scheitelbereich (112) des SiGe-Abschnitts (108), bei dem die Germanium-Konzentration gleich dem zweiten Wert ist, in Kontakt mit einem Gas und/oder einem Material (202) mit geringerem Brechungsindex als Silicium ist, wobei der zweite Wert der Germanium-Konzentration in dem SiGe-Abschnitt (108) höher als etwa 20 % ist.

12. Verfahren nach Anspruch 11, ferner umfassend vor dem Herstellen des SiGe-Abschnitts (108) das Herstellen einer zweiten Schicht (104) auf Basis von Silicium auf der ersten Schicht (102), wobei der SiGe-Abschnitt (108) dann auf der zweiten Schicht (104) ausgebildet wird.

13. Verfahren nach Anspruch 12, wobei der SiGe-Abschnitt (108) durch das Durchführen der nachfolgenden Schritte ausgebildet wird:

- Epitaxie einer SiGe-Schicht (122) auf der zweiten Schicht (104), derart, dass eine Germanium-Konzentration in der SiGe-Schicht (122) kontinuierlich zwischen einem ersten Wert und einem zweiten Wert, der höher als der erste Wert ist, in einer Richtung im Wesentlichen senkrecht zur Fläche (103) der ersten Schicht (102) variiert,
- Photolithographie und Ätzen der SiGe-Schicht (122), welche den SiGe-Abschnitt (108) bildet.

14. Verfahren nach Anspruch 13, wobei der Schritt des Ätzens der SiGe-Schicht (122) derart erfolgt, dass ein Teil der zweiten Schicht (104) auch geätzt wird, der einen Silicium-Abschnitt (106) bildet, auf dem der SiGe-Abschnitt (108) angeordnet ist, derart, dass der Silicium-Abschnitt (106) in einer parallel zur Fläche (103) der ersten Schicht (102) verlaufenden Ebene eine Breite und eine Länge hat, die im Wesentlichen ähnlich zu einer Breite bzw. einer Länge des SiGe-.Abschnitts (108) sind, und eine Dicke senkrecht zur Fläche (103) der ersten Schicht (102) aufweist, die größer als die Dicke der restlichen zweiten Schicht (104) ist.

15. Verfahren nach einem der Ansprüche 11 oder 12, ferner umfassend vor dem Ausbilden des SiGe-Abschnitts (108) das Ausbilden eines Silicium-Abschnitts (106) auf der ersten Schicht (102), an dem der SiGe-Abschnitt (108) ausgebildet ist, wobei der Silicium-Abschnitt (106) in einer parallel zur Fläche (103) der ersten Schicht (102) verlaufenden Ebene eine Breite und eine Länge hat, die im Wesentlichen ähnlich zu einer Breite bzw. einer Länge des SiGe-Abschnitts (108) sind.

16. Vorrichtung zum Detektieren von Gas vom Typ NDIR, enthaltend zumindest eine Vorrichtung (100, 200) zur nicht-linearen Umwandlung nach einem der Ansprüche 1 bis 10, wobei die Umwandlungsvorrichtung dazu geeignet ist, eine Detektion von einem Gas durchzuführen.

## Claims

1. Device (100, 200) suitable for a non-linear conversion of a first infrared signal into a second infrared signal whose wavelength is less than that of the first infrared signal by four-wave mixing, comprising at least one portion of SiGe (108) arranged on at least one first layer (102) of material whose refractive index is less than that of silicon, wherein a germanium concentration in the portion of SiGe (108) varies continuously between a first value and a second value which is greater than the first value, along a direction which is approximately perpendicular to a face (103) of the first layer (102) on which the portion of SiGe (108) is arranged, the first value corresponding to the germanium concentration of a face (110) of the portion of SiGe (108) facing the first layer (102), and in which a summital part (112) of the portion of SiGe (108) in which the germanium concentration is equal to the second value is in contact with a gas and/or a material (202) whose refractive index is less than that of silicon, the second value of the germanium concentration in the portion of SiGe (108) being greater than about 20 %.

2. Device (100, 200) according to claim 1, in which the wavelength of the first infrared signal intended to be converted by the device is between about 3 $\mu$m and 7.5 $\mu$m and in which the wavelength of the second infrared signal intended to be outputted by the device is between about 1.3 $\mu$m and 1.9 $\mu$m.

3. Device (100, 200) according to one of preceding claims, wherein said device (100, 200) forms a waveguide which is suitable for receiving, as an input signal, the first infrared signal and a pump signal whose wavelength is different from those of the first infrared signal and of the second infrared signal, with the SiGe portion (108) forming a core of the waveguide in which the non-linear conversion is able to take place.

4. Device (100, 200) according to one of preceding claims, in which the first layer (102) comprises $SiO_2$ or sapphire.

5. Device (100, 200) according to one of preceding claims, in which the summital part (112) of the portion of SiGe (108) and the lateral flanks (113) of the portion of SiGe (108) are in contact with air or at least one gas or $SiO_2$ (202) or sapphire.

6. Device (100) according to one of preceding claims, which includes in addition a second layer (104) which is silicon-based and arranged between the first layer (102) and the portion of SiGe (108).

7. Device (100) according to claim 6, in which the thickness of the second layer (104) is less than or equal to about 0.3 $\mu$m.

8. Device (100) according to one of claims 6 or 7, in which the second layer (104) includes a portion of silicon (106) on which the portion of SiGe (108) is arranged, wherein said portion of silicon (106) includes, in a plane parallel to said face (103) of the first layer (102), a width and a length which are approximately similar to a width and a length respectively of the portion of SiGe (108), and which includes a thickness, perpendicular to said face (103) of the first layer (102) which is greater than the thickness of the rest of the second layer (104).

9. The device according to one of claims 1 to 5, which includes in addition a portion of silicon (106) arranged on the first layer (102) and on which the portion of SiGe (108) is arranged, with said portion of silicon including, in a plane parallel to said face (103) of the first layer (102), a width and a length which are approximately similar to a width and a length respectively of the portion of SiGe (108).

10. Device (100, 200) according to one of preceding claims, in which the portion of SiGe (108) is of an approximately rectangular parallelepiped shape and includes, in a plane parallel to said face (103) of the first layer (102), a width of between about 0.5 $\mu$m and 0.7 $\mu$m and a length between about 1 cm and 5 cm, and a height, perpendicular to said face (103) of the first layer (102) which is between about 1.3 $\mu$m and 1.6 $\mu$m.

11. Process for making a device (100, 200) suitable for a non-linear conversion of a first infrared signal into a second infrared signal whose wavelength is less than that of the first infrared signal by four wave mixing, which includes at least the making of a portion of SiGe (108) arranged on at least one first layer (102) of material whose refractive index is less than that of silicon and such that a concentration of germanium in the portion of SiGe (108) varies continuously between a first value and a second value which is greater than the first value in a direction which is approximately perpendicular to a face (103) of the first layer (102) on which the portion of SiGe (108) is made, the first value corresponding to the germanium concentration of a face (110) of the portion of SiGe (108) facing the first layer (102), and in which a summital part (112) of the portion of SiGe (108) in which the germanium concentration is equal to the second value is in contact with a gas and/or a material (202) whose refractive index is less than that of silicon, the second value of the germanium concentration in the portion of SiGe (108) being greater than about 20 %.

12. Process according to claim 11, which includes, in addition, prior to the making of the portion of SiGe (108), the making of a silicon-based second layer (104) on the first layer (102), where the portion of SiGe (108) is then made on the second layer (104).

13. Process according to claim 12, in which the portion of SiGe (108) is made using the following steps:

    - epitaxy of a layer of SiGe (122) onto the second layer (104) so that a germanium concentration in the layer of SiGe (122) varies continuously between a first value and a second value which is greater than the first value in a direction which is approximately perpendicular to the said face (103) of the first layer (102),
    - photolithography and etching of the layer of SiGe (122), forming the said portion of SiGe (108).

14. Process according to claim 13, in which the step of etching the layer of SiGe (122) is carried out such that a part of the second layer (104) is also etched, forming a portion of silicon (106) on which the portion of SiGe (108) is arranged such that the said portion of silicon (106) includes, in a plane parallel to said face (103) of the first layer (102), a width and a length that are approximately similar to a width and a length respectively of the portion of SiGe (108), and comprising a thickness, perpendicular to said face (103) of the first layer (102), which is greater than the thickness of the rest of the second layer (104).

15. The process according to one of claims 11 or 12, which includes in addition, prior to the making of the portion of SiGe (108), the making of a portion of silicon (106) on the first layer (102) and on which the portion of SiGe (108) is made, wherein said portion of silicon (106) includes, in a plane parallel to said face (103) of the first layer (102), a width and a length which are approximately similar to a width and a length respectively of the portion of SiGe (108).

16. A NDIR-type gas detection device which includes at least one non-linear conversion device (100, 200) according to one of claims 1 to 10, in which said conversion device is suitable for carrying out a detection of a gas.

FIG.1

FIG.2

FIG.3

FIG.4

FIG.5

FIG.6

FIG.7

FIG.8

Z
Y ⊗ → X

103
102
118
116

## FIG.9A

Z
Y ⊗ → X

103
102
120
116

## FIG.9B

Z
Y ⊗ → X

122
103
102
120
116

## FIG.9C

Z
Y ⊗ → X

112
114
108
103
102
106
100
104
116
110

## FIG.9D

FIG.10A

FIG.10B

FIG.10C

FIG.10D

FIG.10E

FIG.11

**EP 2 818 921 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HUANG et al.** *Proc SPIE 8155 Infrared Sensors, Devices, and Applications*
- *Single Photon Imaging,* 2011, vol. II
- **M.A. ETTATIB.** FWM-based Wavelength Conversion in a Silicon Waveguide. *OFC,* 2013
- **E-K TIEN et al.** Discrète parametric band conversion in silicon for mid-infrared applications. *Optics Express 18,* 2010, vol. 18 (21), 21981-21989